(19)

**Europäisches Patentamt**
**European Patent Office**
**Office européen des brevets**

(11) **EP 4 033 422 A1**

(12) **EUROPEAN PATENT APPLICATION**

(43) Date of publication:
**27.07.2022 Bulletin 2022/30**

(21) Application number: **21202071.3**

(22) Date of filing: **12.10.2021**

(51) International Patent Classification (IPC):
**G06Q 10/04** (2012.01)

(52) Cooperative Patent Classification (CPC):
**G06Q 10/047**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.01.2021 US 202163139769 P**
**07.04.2021 US 202117225083**

(71) Applicant: **Samsung Electronics Co., Ltd.**
**Suwon-si, Gyeonggi-do 16677 (KR)**

(72) Inventor: **LEE, Ronald C.**
**Pleasanton, CA, 94566 (US)**

(74) Representative: **Kuhnen & Wacker**
**Patent- und Rechtsanwaltsbüro PartG mbB**
**Prinz-Ludwig-Straße 40A**
**85354 Freising (DE)**

Remarks:
Amended claims in accordance with Rule 137(2) EPC.

(54) **SYSTEMS, METHODS, AND APPARATUS FOR STORAGE QUERY PLANNING**

(57) A method may include receiving a request for storage resources to access a dataset for a processing session, allocating, based on the dataset, one or more storage nodes for the processing session, and mapping one or more of the storage nodes to one or more compute nodes for the processing session through one or more network paths. The method may further include returning a resource map of the one or more storage nodes and the one or more compute nodes. The method may further include estimating an available storage bandwidth for the processing session. The method may further include estimating an available client bandwidth. The method may further include allocating a bandwidth to a connection between at least one of the one or more storage nodes and at least one of the one or more compute nodes through one of the network paths.

FIG. 1

EP 4 033 422 A1

**Description**

TECHNICAL FIELD

This disclosure relates generally to storage queries, and more specifically to systems, methods, and apparatus for storage query planning.

BACKGROUND

Data processing sessions may read datasets that may be stored across multiple storage nodes. Data from different storage nodes may be accessed through a network and processed by different compute nodes.

The above information disclosed in this Background section is only for enhancement of understanding of the background of the invention and therefore it may contain information that does not constitute prior art.

SUMMARY

A method may include receiving a request for storage resources to access a dataset for a processing session, allocating, based on the dataset, one or more storage nodes for the processing session, and mapping the one or more of the storage nodes to one or more compute nodes for the processing session through one or more network paths. The method may further include returning a resource map of the one or more storage nodes and the one or more compute nodes. The resource map may include an allocated resource map. The resource map may include an availability resource map. The method may further include estimating an available storage bandwidth for the processing session. The method may further include estimating an available client bandwidth. The method may further include allocating a bandwidth to a connection between at least one of the one or more storage nodes and at least one of the one or more compute nodes through one of the network paths. The available storage bandwidth for the processing session may be estimated based on benchmark data for the one or more storage nodes. The available storage bandwidth for the processing session may be estimated based on historical data for the one or more storage nodes. The method may further include determining a performance of accessing the dataset for the processing session. determining a performance of accessing the dataset for the processing session may include determining a quality-of-service (QoS) for the processing session. Determining a QoS for the processing session may include calculating a QoS probability based on one of baseline data or historical data for the one or more storage nodes. The method may further include monitoring an actual performance of the one or more storage nodes for the processing session. The processing session may include an artificial intelligence training session.

A system may include one or more storage nodes configured to store a dataset for a processing session, one or more network paths configured to couple the one or more storage nodes to one or more compute nodes for the processing session, and a storage query manager configured to receive a request for storage resources to access the dataset for the processing session, allocate at least one of the one or more of the storage nodes for the processing session based on the request, and map the at least one allocated storage node to at least one of the one or more compute nodes for the processing session through at least one of the one or more network paths. The storage query manager may be further configured to allocate a bandwidth to a connection between at least one of the one or more storage nodes and at least one of the one or more compute nodes through at least one of the one or more network paths. The storage query manager may be further configured to estimate an available storage bandwidth for the processing session, estimate an available client bandwidth for the processing session, and return a resource map based on the available storage bandwidth and the available client bandwidth for the processing session. The storage query manager may be further configured to predict a quality-of-service (QoS) for the processing session.

A method may include receiving a request for storage resources for a processing session, wherein the request includes information about a dataset and one or more compute nodes, allocating a storage node based on the dataset, allocating one of the compute nodes, allocating a bandwidth for a network connection between the storage node and the allocated compute node, and returning a resource allocation map for the processing session based on the storage node, the allocated compute node, and the network connection. The storage node may be a first storage node, the allocated compute node may be an allocated first compute node, the bandwidth may be a first bandwidth, and the network connection may be a first network connection, and the method may further include allocating a second storage node based on the dataset, allocating a second compute node from among the compute nodes, and allocating a second bandwidth for a second network connection between the second storage node and the allocated second compute node. The resource allocation map is further based on the second storage node, the allocated second compute node, and the second network connection.

BRIEF DESCRIPTION OF THE DRAWINGS

The figures are not necessarily drawn to scale and elements of similar structures or functions may generally be represented by like reference numerals or portions thereof for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.

Fig. 1 illustrates an embodiment of a storage query planning architecture in accordance with example embodiments of the disclosure.

Fig. 2 illustrates an example embodiment of a storage query planning architecture in accordance with example embodiments of the disclosure.

Fig. 3 illustrates an example embodiment of a compute server in accordance with example embodiments of the disclosure.

Fig. 4 illustrates an example embodiment of a storage server in accordance with example embodiments of the disclosure.

Fig. 5 illustrates an example embodiment of a network and QoS management architecture in accordance with example embodiments of the disclosure.

Fig. 6 illustrates an embodiment of a method for initializing a storage query manager in accordance with example embodiments of the disclosure.

Fig. 7 illustrates an embodiment of a method for operating a storage query manager in accordance with example embodiments of the disclosure.

Fig. 8 illustrates an example embodiment of an availability resource map in accordance with example embodiments of the disclosure.

Fig. 9 illustrates an example embodiment of a resource allocation map in accordance with example embodiments of the disclosure.

Fig. 10 illustrates an embodiment of a system including storage, networking, and compute resources in accordance with example embodiments of the disclosure.

Fig. 11 illustrates embodiments of methods for estimating performance in accordance with example embodiments of the disclosure.

Fig. 12 illustrates a method in accordance with example embodiments of the disclosure.

Fig. 13 illustrates another method in accordance with example embodiments of the disclosure.

DETAILED DESCRIPTION

Overview

During processing sessions such as artificial intelligence (AI) training and/or inferencing sessions, multiple compute resources may access datasets on a storage system through one or more network paths. If the storage system does not provide deterministic and/or predictable performance, some of the compute resources may be starved for data while others may appropriate more storage bandwidth than needed. This may result in unpredictable and/or extended session completion times and/or underutilized storage resources, especially when running multiple concurrent processing sessions. It may also cause users to overprovision the storage system in an attempt to speed up a processing session.

In accordance with example embodiments of the disclosure, a storage query plan (SQP) may be created for a processing session to allocate resources such as storage bandwidth before initiating the session. Depending on the implementation details, this may enable more efficient use of storage resources and/or predictable and/or consistent run-times for processing sessions.

In some embodiments, a user application may issue a request for resources to enable compute resources at one or more client nodes to access a dataset during a processing session. The request may include information such as the number of compute resources, the bandwidth of each of the compute resources, information about the dataset, and/or the like. Based on the information in the request, a storage query manager may create a storage query plan for the processing session by allocating and/or scheduling compute, network, and/or storage resources. The storage query manager may allocate resources, for example, by estimating the total available storage bandwidth for a processing session, and/or estimating the total available client bandwidth. In some embodiments, the storage query manager may allocate enough storage and/or network bandwidth to satisfy the total available client bandwidth, which may leave resources available for other concurrent processing sessions.

In some embodiments, a storage query manager may predict a quality-of-service (QoS) for the processing session based, for example, on baseline and/or historical performance data for the allocated resources to determine if the storage query plan is likely to provide adequate performance.

In some embodiments, a user application may access the services of a storage query manager through an application programming interface (API). The API may include a command set to enable the user application to request resources for a processing session, check the status of a request, schedule resources, release resources, and/or the like.

In some embodiments, a storage query manager may manage and/or monitor client compute resources, network resources, and/or storage resources during execution of a processing session, for example, to determine whether pre-allocated resources and/or performance are being provided.

The principles disclosed herein have independent utility and may be embodied individually, and not every embodiment may utilize every principle. However, the principles may also be embodied in various combinations, some of which may amplify the benefits of the individual principles in a synergistic manner.

Processing Sessions

Although the principles disclosed herein are not limited to any particular applications, in some embodiments, the techniques may be especially beneficial when applied to AI training and/or inferencing sessions. For example, some AI training sessions may run a training algorithm using one or more compute units (CUs) located at one or more client nodes such as training servers. During a training session, the compute units may each access some or all of a training dataset that may be distributed over one or more storage resources such as the nodes of a storage cluster.

In the absence of a storage query plan to reserve and/or manage performance across the storage resources in accordance with example embodiments of the disclosure, the individual compute resources may not have access to the relevant portions of the dataset during the time slots in which they may need them. This may be especially problematic in data parallel training sessions where multiple sets of compute units running concurrent training sessions may share the storage resources to access the same dataset. Moreover, for one or more batch sizes in data parallel training, gradients for one or more compute resources may be aggregated frequently. This may prevent relevant data from being provided consistently to individual compute resources at a deterministic rate.

Some AI training sessions, however, may tend to access data in a read-only manner and/or in predictable access patterns. For example, an AI training application may know in advance of each training session which compute resources may access which portions of a training dataset during specific time slots. This may facilitate the creation of a storage query plan that may coordinate resources for multiple concurrent AI training sessions to enable them to share the same storage resources in a manner that may increase storage utilization.

Storage Query Planning Architecture

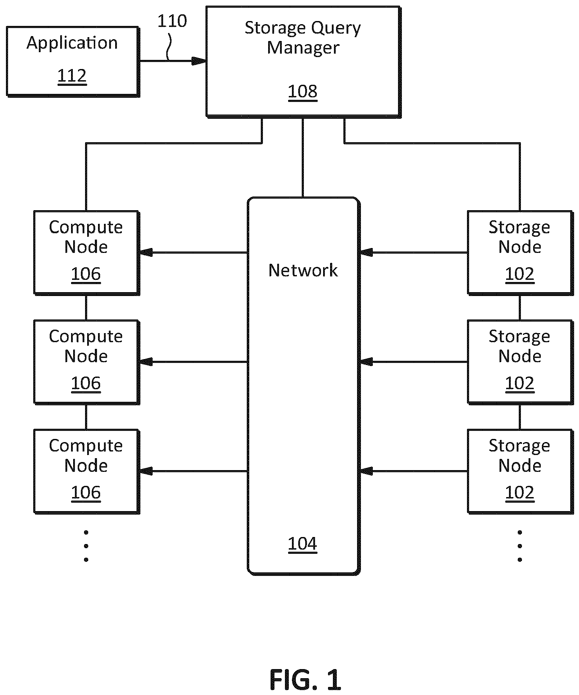

Fig. 1 illustrates an embodiment of a storage query planning architecture in accordance with example embodiments of the disclosure. The embodiment illustrated in Fig. 1 may include one or more storage nodes 102 configured to store a dataset for a processing session, and a network 104 which may include one or more network paths configured to connect the one or more storage nodes 102 to one or more compute nodes 106 to enable the one or more compute nodes 106 to access at least a portion of the dataset. The embodiment illustrated in Fig. 1 may further include a storage query manager 108 configured to receive a request 110 from an application 112 for storage resources to enable one or more of the compute nodes 106 to access at least a portion of the dataset for a processing session. The storage query manager 108 may be further configured to allocate, based on the dataset, one or more storage nodes for the processing session. The storage query manager 108 may be further configured to map the one or more allocated storage nodes 102 to the one or more compute nodes 106 for the processing session through one or more of the network paths of the network 104.

The one or more storage nodes 102 may be implemented with any type and/or configuration of storage resources. For example, in some embodiments, one or more of the storage nodes 102 may be implemented with one or more storage devices such as hard disk drives (HDDs) which may include magnetic storage media, solid state drives (SSDs) which may include solid state storage media such as not-AND (NAND) flash memory, optical drives, drives based on any type of persistent memory such as cross-gridded nonvolatile memory, memory with bulk resistance change, and/or the like, and/or any combination thereof. In some embodiments, the one or more storage nodes 102 may be implemented with multiple storage devices arranged, for example, in one or more servers configured, for example, in one or more server chassis, server racks, groups of server racks, datarooms, datacenters, edge data centers, mobile edge datacenters, and/or the like, and/or any combination thereof. In some embodiments, the one or more storage nodes 102 may be implemented with one or more storage server clusters.

The network 104 may be implemented with any type and/or configuration of network resources. For example, in some embodiments, the network 104 may include any type of network fabric such as Ethernet, Fibre Channel, InfiniBand, and/or the like, using any type of network protocols such as Transmission Control Protocol/Internet Protocol (TCP/IP), Remote Direct Memory Access (RDMA) over Converged Ethernet (RoCE), and/or the like, any type of storage interfaces and/or protocols such as Serial ATA (SATA), Small Computer Systems Interface (SCSI), Serial Attached SCSI (SAS), Non-Volatile Memory Express (NVMe), NVMe-over-fabric (NVMe-oF), and/or the like. In some embodiments, the network 104 may be implemented with multiple networks and/or network segments interconnected with one or more switches, routers, bridges, hubs, and/or the like. Any portion of the network or segments therefore may be configured as one or more local area networks (LANs), wide area networks (WANs), storage area networks (SANs), and/or the like, implemented with any type and/or configuration of network resources. In some embodiments, some or all of the network 104 may be implemented with one or more virtual components such as a virtual LAN (VLAN), virtual WAN, (VWAN), and/or the like.

The one or more compute nodes 106 may be implemented with any type and/or configuration of compute resources. For example, in some embodiments, one or more of the compute nodes 106 may be implemented with one or more compute units such as central processing units (CPUs), graphics processing units (GPUs), neural processing units (NPUs), tensor processing units (TPUs), and/or the like. In some embodiments, one or more of the compute nodes 106 and/or compute units thereof may be implemented with combinational logic, sequential logic, one or more timers, counters, registers, state machines, volatile memories such as dynamic random access memory (DRAM) and/or static random access memory (SRAM), nonvolatile memory such as flash memory, complex programmable logic devices (CPLDs), field programmable gate arrays (FPGAs), application specific integrated circuits (ASICs), complex instruction set computer (CISC) processors such as x86 processors and/or reduced instruction set computer (RISC) processors such as ARM processors, and/or the like executing instructions stored in any type of memory. In some embodiments, the one or more of the compute nodes and/or compute units thereof 106 may be implemented with any combination of the resources described herein. In some embodiments, the one or more compute nodes 106 and/or compute units thereof may be implemented with multiple compute resources arranged, for example, in one or more servers configured, for example, in one or more server chassis, server racks, groups of server racks, datarooms, datacenters, edge data centers, mobile edge datacenters, and/or the like, and/or any combination thereof. In some embodiments, the one or more compute nodes 106 may be implemented with one or more compute server clusters.

The storage query manager 108 may be implemented with hardware, software, or any combination thereof. For example, in some embodiments, the storage query manager 108 may be implemented with combinational logic, sequential logic, one or more timers, counters, registers, state machines, volatile memories such as DRAM and/or SRAM, nonvolatile memory such as flash memory, CPLDs, FPGAs, ASICs, CISC processors and/or RISC processors, and/or the like executing instructions, and/or the like, as well as GPUs, NPUs, TPUs, and/or the like.

Depending on the implementation details, the embodiment illustrated in Fig. 1 may provide any number of the following features and/or benefits.

In some embodiments, a cluster of storage nodes may provide deterministic input and/or output operations per second (IOPS) and/or bandwidth which may enable the creation of a storage query plan before each processing session to allocate storage bandwidth before initiating the processing session. This may enable efficient use of storage resources and/or deterministic run-time for existing and/or new sessions.

Some embodiments may create a storage query plan from a deterministic storage cluster that may provide consistent bandwidth performance for each provisioned storage node. In some embodiments, this may involve a storage cluster that may be provisioned for read-only performance and a client node that may provide a specified number of connections, queue depths, and/or I/O (input/output) request sizes.

Some embodiments may enable deterministic data parallel and/or other processing session completion times. Some embodiments may utilize a storage cluster efficiently by intelligently distributing load to some or all storage nodes in the cluster. This may enable multiple concurrent processing sessions to share the same storage resources. Some embodiments may support scheduling of storage queries, for example, by notifying a user and/or application when resources are available.

Some embodiments may effectively utilize some or all of the performance available from a storage cluster, which may reduce operating costs. In some embodiments, a storage query plan may reduce or eliminate uncertainty and/or unpredictability of one or more processing sessions. This may be especially effective where multiple concurrent processing sessions may use the same storage cluster. Some embodiments may simplify storage usage, for example, by providing a simplified user interface and/or storage performance management.

Some embodiments may manage storage cluster performance, for example, by estimating the overall performance capability of one or more compute units, storage resources, and/or network components and creating a database to manage allocation and deallocation of bandwidths for one or more storage query plans. Some embodiments may provide API services which may simplify the use of a storage cluster by a processing application, for example, by enabling a user and/or application to provide a dataset and set of bandwidth requirements, and receive a mapping of storage resources to use for a processing session.

In some embodiments, providing a user and/or application with a storage query plan prior to a processing session may enable the user and/or application to decide whether to execute the processing session. For example, a storage query plan that may reserve resources may enable a user and/or application to determine whether the storage and network resources can provide enough performance to successfully execute a processing session and may prevent interference with other currently running sessions. This may be especially beneficial for data parallel AI training sessions where operating multiple compute units (e.g., GPUs) may involve data being consistently accessed at a deterministic rate. Some embodiments may provide resource coordination and/or management which may improve storage and/or network utilization, for example, running multiple AI training sessions on a shared storage cluster.

Some embodiments may monitor and/or manage overall processing session resources including client compute units such as GPUs, network resources, and/or storage resources during execution to ensure that pre-allocated resources provide performance that may be estimated prior to initiation of a processing session.

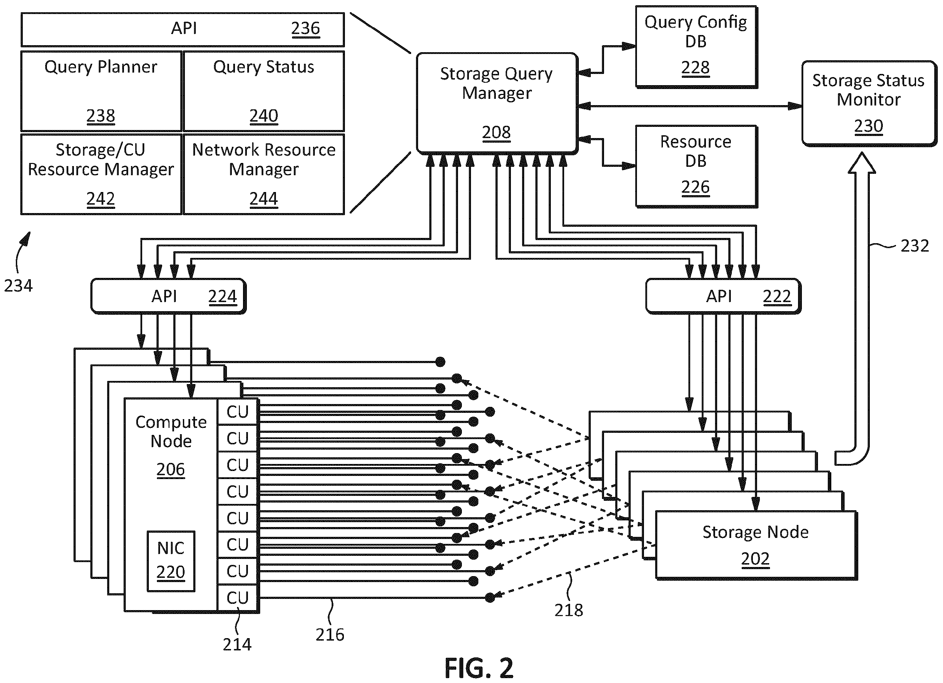

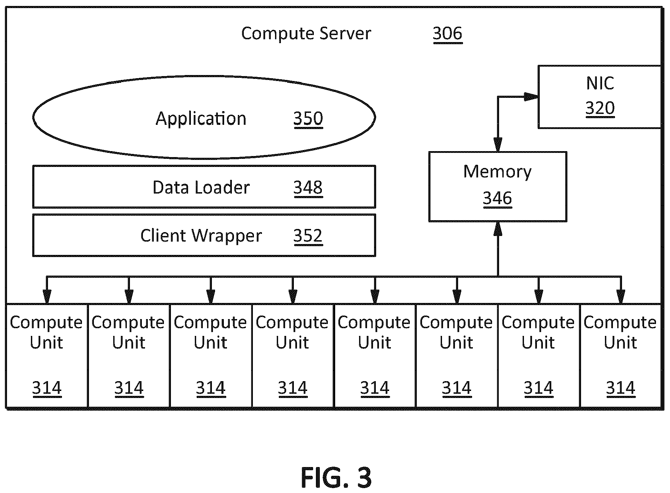

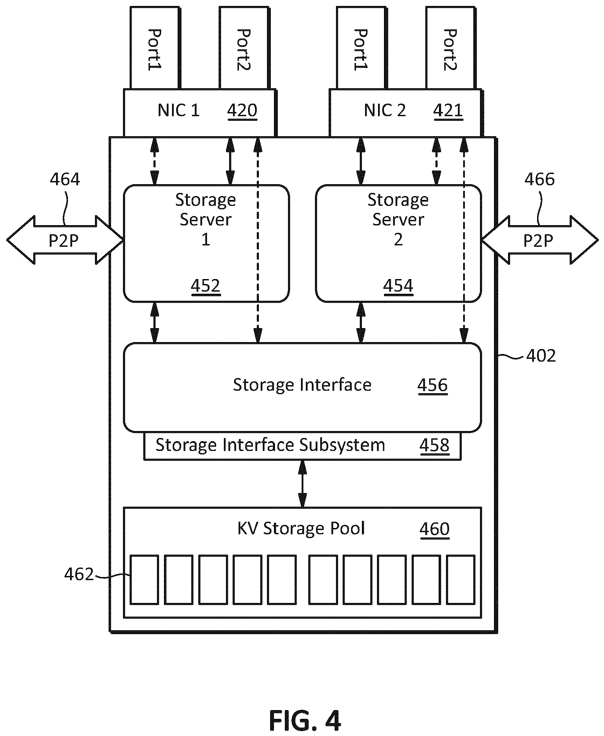

Fig. 2 illustrates an example embodiment of a storage query planning architecture in accordance with example embodiments of the disclosure. The embodiment illustrated in Fig. 2 may illustrate some possible example implementation details for the embodiment illustrated in Fig. 1. The embodiment illustrated in Fig. 2 may include one or more storage nodes 202, one or more compute nodes 206, and a storage query manager 208. Each of the one or more storage nodes 202 may be implemented, for example, with any type of key-value (KV) storage scheme such as object storage which may store all or a portion of one or more datasets in the form of one or more objects. Each of the one or more compute nodes 206, which may also be referred to as client nodes, may be implemented, for example, as a compute server which, in the example illustrated in Fig. 2, may include one or more compute units 214. If the embodiment illustrated in Fig. 2 is used for AI training sessions, the one or more compute nodes 206 may be referred to as training nodes or training servers. (A more detailed example of a compute node 206 may be illustrated in Fig. 3. A more detailed example of a storage node 202 may be illustrated in Fig. 4.)

Network connections 216, which may represent ports, handles, and/or the like, may be illustrated conceptually to show connections between compute units 214 and storage nodes 202 through network paths 218, which may be established, for example, by the storage query manager 208 as part of a storage query plan for a processing session. In some embodiments, actual connections between compute units 214 and storage nodes 202 may be established through a network interface controller (NIC) 220 on the respective compute server 206. In some embodiments, and depending on the implementation details, a relatively large number of network connections 216 and network paths 218 may be configured to provide many-to-many data parallel operations which may be coordinated to enable efficient use of storage resources and/or deterministic run-time behavior for multiple concurrent processing sessions.

The storage query manager 208 may collect resource information from, and/or transmit resource allocations to, the one or more storage nodes 202 through a storage-side API 222. The storage query manager 208 may collect resource information from, and/or transmit resource allocations to, the one or more compute servers 206 through a client-side API 224. The APIs 222 and 224 may be implemented with any suitable type of API, for example, a representational state transfer (REST) API which may facilitate interactions between the storage query manager 208 and the client-side and storage-side components through the network infrastructure. In some embodiments, a REST API may also enable a user and/or application to easily utilize the QoS services that may be provided by the one or more storage nodes 202. In some embodiments, one or more features of the API may be accessible, for example, through a library that may run on the one or more compute servers 206 and handle the IO(input and/or output)s to the one or more storage servers 202.

The storage query manager 208 may use one or more resource databases 226 to maintain information on the numbers, types, capabilities, benchmark performance data, historical performance data, and/or the like of resources present in the system including storage resources, compute resources, network resources, and/or the like. The storage query manager 208 may use one or more query configuration databases 228 to maintain information on requests for resources, storage query plans, connection, configurations, and/or the like.

A storage status monitor 230 may monitor and/or record information on the status and/or operation of any of the storage resources, network resources, compute resources, and/or the like in the system. For example, the storage status monitor 230 may monitor one or more QoS metrics 232 of the storage resources to enable the storage query manager 208 to evaluate the performance of various components of the system to determine if a storage query plan is performing as expected. As another example, the storage status monitor 230 may collect historical performance data that may be used to more accurately estimate the performance of various resources for future storage query plans. The storage status monitor 230 may be implemented with any performance QoS monitoring resources such as Graphite, Collectd, and/or the like.

The storage status monitor 230, one or more resource databases 226, and one or more query configuration databases 228 may be located at any suitable location or locations in the system. For example, in some embodiments, the storage status monitor 230 and databases 226 and 228 may be located on a dedicated server. In some other embodiments, the storage status monitor 230 and databases 226 and 228 may be integrated with, and/or distributed among, other components such as the storage nodes 202, compute servers 206.

The embodiment illustrated in Fig. 2 may also include a representation of a software structure 234 for the storage query manager 208 . The structure 234 may include a storage query API 236, which may be used by one or more user applications (e.g., processing applications such as AI training and/or inferencing applications) to access the services provided by the storage status monitor 230. A query planning module 238 may generate storage query plans in response to resource requests received through the storage query API 236. A query status module 240 may monitor the status and/or performance of one or more storage query plans using, for example, information in the one or more query configuration databases 228. A storage/compute resource manager module 242 may manage storage and/or compute resources using, for example, information in the one or more resource databases 226. A network resource manager module 244 may manage network resources using, for example, information in the one or more resource databases 226.

Fig. 3 illustrates an example embodiment of a compute server in accordance with example embodiments of the disclosure. The compute server 306 illustrated in Fig. 3, which may operate as one or more storage nodes, may include a NIC 320, a memory 346, and any number of compute units 314. A data loader 348 (e.g. data loader component) may be configured to load one or more portions of a dataset received from one or more storage nodes through NIC 320 for a processing session into memory 346 and then distribute the one or more portions of the dataset to the compute units 314 that may use the data. The data loader 348 may operate under the control of a processing application 350 (e.g., a user application that may implement a processing session such as an AI training and/or inferencing session). Some embodiments may further include a client wrapper 352 which may enable the compute server 306 to operate as part of a disaggregated storage system as described below.

The compute units 314, NIC 320, and/or data loader 348 may be implemented hardware, software, or any combination thereof including combinational logic, sequential logic, one or more timers, counters, registers, state machines, volatile memories such as DRAM and/or SRAM, nonvolatile memory such as flash memory, CPLDs, FPGAs, ASICs, CISC processors and/or RISC processors, and/or the like, executing instructions, and/or the like, as well as GPUs, NPUs, TPUs, and/or the like.

Fig. 4 illustrates an example embodiment of a storage server in accordance with example embodiments of the disclosure. The storage server 402 illustrated in Fig. 4 may be used to implement, for example, one or more of the storage nodes 102 illustrated in Fig. 1, one or more of the storage nodes 202 illustrated in Fig. 2, and/or the like. The storage server 402 may include a first dual-port NIC 420, a second dual-port NIC 421, a first storage server 452, a second storage server 454, a storage interface 456, a storage interface subsystem 458, and a KV storage pool 460.

The storage servers 452 and 454 may be implemented, for example, with any type of key-value (KV) storage scheme. In some embodiments, the storage servers 452 and 454 may implement KV storage using an object storage scheme in which all or a portion of one or more datasets may be stored in the form of one or more objects. Examples of suitable object storage servers may include MinIO, OpenIO, and/or the like. In some embodiments, a name server or other scheme may be used for item mappings. In some embodiments, the storage servers 452 and 454 may be implemented with a key-value management scheme that may be scaled to store very large datasets (e.g., petabyte (PB) scale and beyond) and/or a name server that may handle a large number of item mappings may be used (e.g., to handle a write-once, read many implementation).

In some embodiments, the storage servers 452 and 454 may provide an object storage interface between the NICs 420 and 421 and the storage interface 456. The storage interface 456 and storage interface subsystem 458 may be implemented for example, as an NVMe target and an NVMe subsystem, respectively, to implement high-speed connections, queues, input and/or output (I/O) requests, and/or the like, for the KV storage pool 460. In some embodiments, the KV storage pool 460 may be implemented with one or more KV storage devices (e.g., KV SSDs) 462. Alternatively, or additionally, the KV storage pool 460 may implement a translation function to translate KV (e.g., object) storage to file or block-oriented storage devices 462.

In some embodiments, the object storage servers 452 and 454 may implement one or more peer-to-peer (P2P) connections 464 and 466, for example, to enable the storage server 402 to communicate with other apparatus (e.g.,

multiple instances of storage server 402) directly without consuming storage bandwidth that may otherwise be involved with sending P2P traffic through the NICs 420 and 421.

Network and QoS Management Architecture

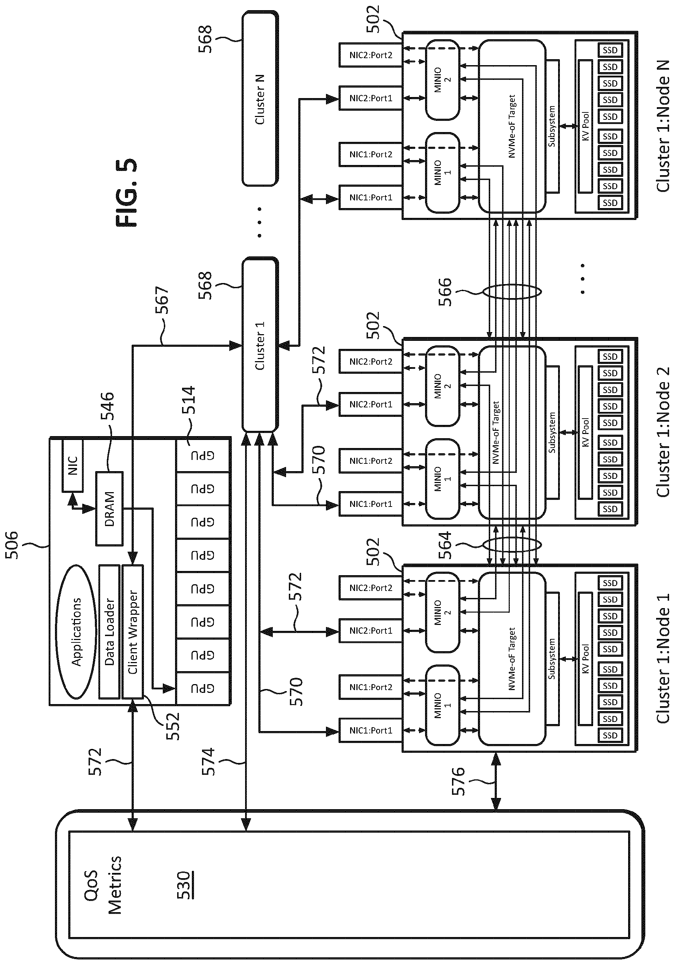

Fig. 5 illustrates an example embodiment of a network and QoS management architecture in accordance with example embodiments of the disclosure. The architecture illustrated in Fig. 5 may be used, for example, to implement any of the storage query planning techniques, QoS monitoring techniques, and/or the like disclosed herein.

The embodiment illustrated in Fig. 5 may include a first cluster of N storage servers 502 configured to be accessed as a cluster through a first cluster switch 568. One or more compute servers 506 may be configured to access the first cluster of storage servers 502 through network connection 567 and the first cluster switch 568. In some embodiments, the one or more compute servers 506 may be implemented, for example, with the compute server 306 illustrated in Fig. 3, and the storage servers 502 may be implemented, for example, with the storage server 402 illustrated in Fig. 4. Network connections 570 and 572 may only be illustrated for port 1 of NIC1 and port 1 of NIC2, respectively, to prevent the drawing from becoming obscured, but connections may also be implemented for port 2 of NIC1 and port 2 of NIC2. In some embodiments, one or more additional cluster switches 568 may be included for one or more additional clusters of storage servers 502.

In some embodiments, each cluster switch 568 may further include functionality for a cluster controller to operate the first cluster of N storage servers 502 as a storage cluster that may implement disaggregated storage. Thus, the client wrapper 552 in conjunction with disaggregated storage functionality in a corresponding cluster switch 568 may present the first cluster of N storage servers 502 to the one or more compute servers 506 as a single storage node configured to improve performance, capacity, reliability, and/or the like. In some embodiments, the P2P connections 564 and/or 566 may enable the storage servers 502 to implement erasure coding of data across the storage servers. Depending on the implementation details, this may enable a dataset for a processing session to be spread more evenly across storage resources which may improve overall storage resource (e.g., bandwidth) utilization, predictability and/or consistency of data access, and/or the like.

In some embodiments, the network infrastructure illustrated in Fig. 5 may be partitioned with one or more virtual network connections (e.g., VLANs), for example, with one or more QoS metrics between one or more compute units 514 (which in this examle may be implemented as GPUs) and one or more storage servers 502. Depending on the implementation details, this may prevent the front-end (e.g., client side) of the network from interfering with the back-end (e.g., storage side) of the network.

In some embodiments, control and data traffic may be sent over the network on separate planes. For example, control commands (e.g., I/O requests) may be sent to the storage servers 502 on a control plane using, for example, TCP, while data may be sent back to the one or more compute servers 506 on a data plane using, for example, RoCE. This may enable data to be sent from a storage server 502 directly to the memory 546 in a compute server 506 using RDMA without any intermediate hops through any memory in the storage server 502. Depending on the implementation details, this may improve latency, bandwidth, and/or the like.

The embodiment illustrated in Fig. 5 may include a storage status monitor 530 that may monitor and/or collect QoS metrics from the one or more compute servers 506, cluster switches 568, and/or storage servers 502 through connections 572, 574, and 576, respectively. Examples of client-side QoS metrics that may be collected for users (e.g., User[1..N]) may include access/secret keys, bandwidth, IOPS, latency, priority, and/or the like. Examples of client-side QoS metrics that may be collected for applications (e.g., Application[1..N]) may include application entity ID/name, bandwidth, IOPS, latency, priority, and/or the like. Examples of client-side QoS metrics that may be collected for storage resources (which may be referred to as buckets) that may be accessed (e.g., Bucket[1..N]) may include bucket name, bandwidth, IOPS, latency, and/or the like.

Examples of storage-side QoS metrics that may be collected (e.g., cap[1..N]) may include cluster ID, server entry endpoint, physical node name, unique user ID (UUID), bucket hosting and/or bucket name, bandwidth, IOPS, small IO cost (e.g., latency), large IO cost (e.g., latency), degraded small IO cost (e.g., latency), degraded large IO cost (e.g., latency), heuristic latency for small IO, heuristic latency for large IO, whether running with degraded performance, whether overloaded, whether the storage node or cluster is down, and/or the like.

In some embodiments, the internal bandwidth of the storage servers 502 (e.g., NVMe-oF components) may be larger than the network such that a QoS may be established primarily by throttling the data transfer speed from the storage server side of the system.

Storage Query Manager Initialization

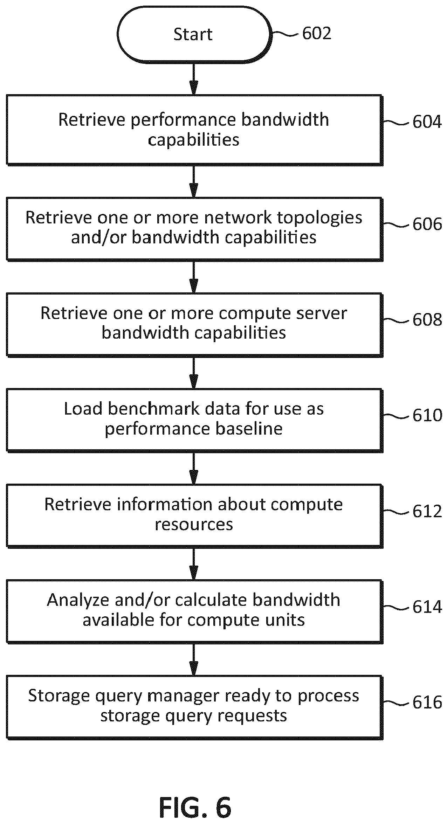

Fig. 6 illustrates an embodiment of a method for initializing a storage query manager in accordance with example embodiments of the disclosure. The embodiment illustrated in Fig. 6 may be described in the context of the architecture illustrated in Fig. 5, but the embodiment illustrated in Fig. 6 may be also implemented, for example, using any of the systems, methods and/or apparatus disclosed herein. In some embodiments, a goal of initializing a storage query manager may be to estimate the available storage bandwidth for a processing session. Depending on the implementation details, this may enable the creation of a storage query plan that may improve or maximize storage utilization for the session.

The method illustrated in Fig. 6 may begin at operation 602. At operation 604, the storage query manager may retrieve performance bandwidth capabilities for one or more storage nodes. In some embodiments, the storage nodes may be implemented, for example, with one or more clusters of storage servers. At operation 606, the storage query manager may retrieve one or more network topologies and/or bandwidth capabilities for network resources that may be utilized for a storage query plan. At operation 608, the storage query manager may retrieve one or more compute server bandwidth capabilities. At operation 610, the storage query manager may load benchmark data for use as a performance baseline for one or more of the storage node, network resources, and/or compute servers. At operation 612, the storage query manager may retrieve information about one or more compute resources such as compute units that may be present in the one or more compute servers. In some embodiments, any or all of the data retrieved and/or loaded at operations 604, 606, 608, 610, and/or 612 may be obtained, for example, from a database such as the resource database 226 illustrated in Fig. 2.

At operation 614, the storage query manager may analyze and/or calculate the bandwidth available for one or more of the compute units of the compute servers based, for example, on the storage server, network, and/or compute server topologies and/or resources. In some embodiments, benchmark data may be used as a baseline reference for the maximum performance capability of any or all of the resources used in operation 614. Benchmark data may be generated, for example, by running one or more tests on the actual resources such as storage, network, and/or compute resources.

At operation 616, the storage query manager may then be ready to process storage query requests from a user and/or application.

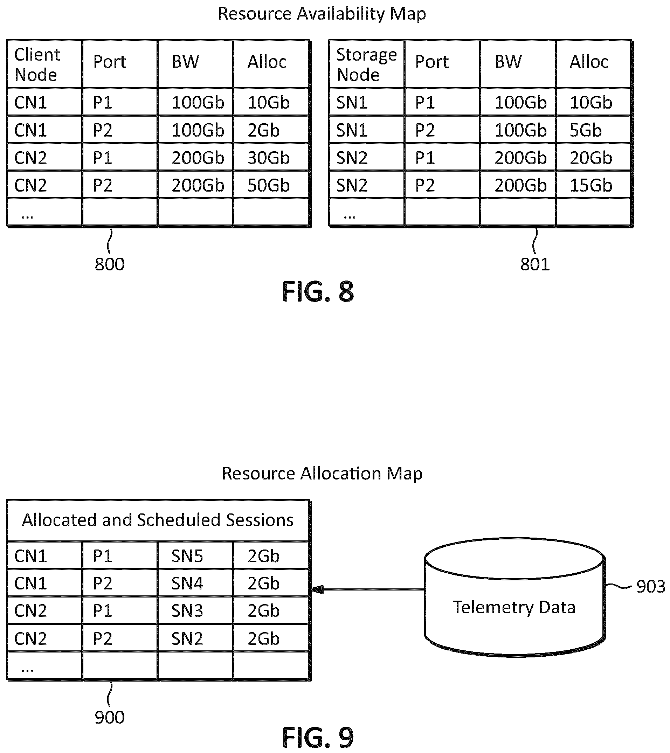

In some embodiments, one or more of the operations of the embodiment illustrated in Fig. 6 may be based on one or more assumptions regarding the one or more storage servers, network capabilities and/or topology, compute servers, and/or the like, for example, as discussed with reference to Fig. 9.

Storage Query Manager Operation

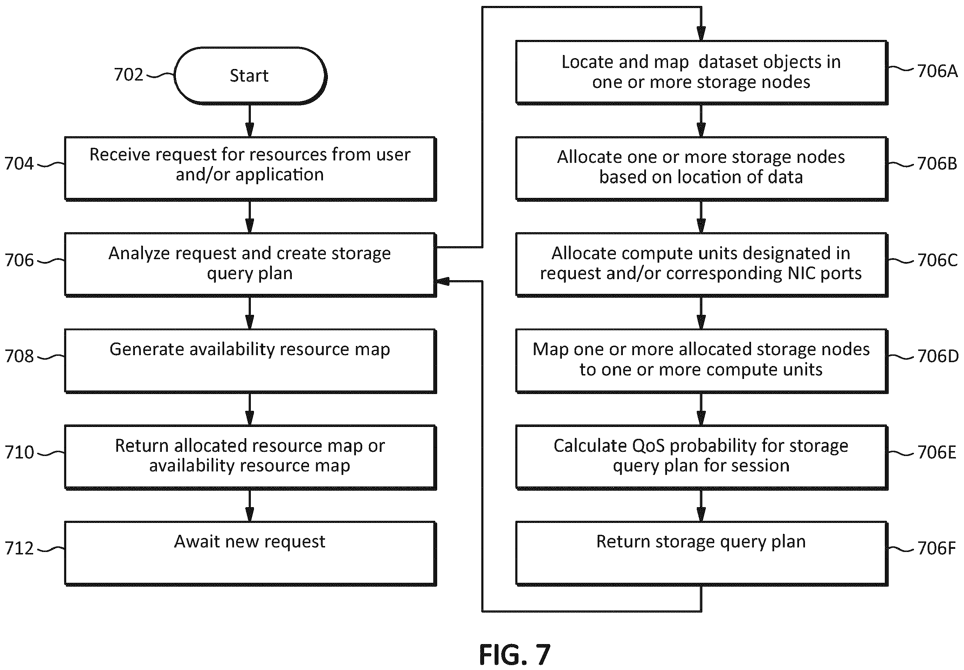

Fig. 7 illustrates an embodiment of a method for operating a storage query manager in accordance with example embodiments of the disclosure. The embodiment illustrated in Fig. 7 may be described in the context of the architecture illustrated in Fig. 5, but the embodiment illustrated in Fig. 7 may be also implemented, for example, using any of the systems, methods and/or apparatus disclosed herein.

In the embodiment illustrated in Fig. 7, the services of the storage query manager may be accessed by a user and/or application through an API as described above. Table 1 lists some exemplary commands that may be used to implement the API. The PALLOC command may be used to determine what resources may be available for a processing session. The PSELECT command may be used to select the resources, which may have been determined in response to the PALLOC command. The PSCHED command may be used to schedule a session using the selected resources. In some embodiments, the PSCHED command may initiate the session immediately if resources are currently available, or as soon as the resources become available. Additionally, or alternatively, the storage query manager may notify the user and/or application when resources become available to determine if the user and/or application still wants to proceed with the session. The PSTAT command may be used by the user and/or application to check (e.g., periodically) if the session is running correctly. The PREL may be used to release resources, for example, after a session is completed. The PABORT command may be used to abort a session.

Table 1

| PALLOC | Check if resources are available for session |
| --- | --- |
| PSELECT | Allocate resources for processing session |
| PSCHED | Schedule session using resources |
| PSTAT | Check status of session |
| PREL | Release resources |
| PABORT | Abort session |

Referring to Fig. 7, the method may begin at operation 702. At operation 704, the storage query manager may receive a request for resources from a user and/or application. In some embodiments, the request may include one or more of the request records illustrated in Table 2. The record Request ID may provide an ID for a new request. The record Data Set[] may include a list of objects that may contain the dataset to be used for a session for which the request has been submitted. In some embodiments, the list of objects may include some or all of the dataset to be loaded for the processing session. Additionally, or alternatively, the record Data Set[] may include one or more selection criteria that the storage query manager may use to select data to be used for the dataset for the session. The data may be selected, for example, from a pre-existing database or other source of potential data for inclusion in the dataset. The record Number of Compute Units may indicate a total number of compute units that may be used by the user and/or application during the session. The compute units may be located, for example, in one or more compute servers. The record NIC/CU bandwidth[index][BW] may include a list of the specific bandwidth (BW) requested for each compute unit associated with each NIC, which may be identified by an index, or the bandwidth may be auto selected. In some embodiments, for data parallel operation, the same amount of bandwidth may be requested for each compute unit, whereas the requested bandwidth per compute unit may be determined individually for other types of operation.

Table 2

| Request ID | ID for new resource requests |
|---|---|
| Data Set[] (List of Objects) | List of objects to load for session or selection criteria |
| Number of Compute Units | Total number of compute units to be used during session |
| NIC/CU Bandwidth[Index][BW] | Specific bandwidth requested per compute unit associated with each NIC |

Referring again to Fig. 7, at operation 706, the storage query manager may analyze the request and create a storage query plan. Operation 706 may include suboperations 706A through 706F. At suboperation 706A, the storage query manager may locate and map the dataset objects in the one or more storage nodes (e.g., in one or more storage servers in one or more storage clusters). At suboperation 706B, the storage query manager may allocate one or more storage nodes based on the location of the data in the dataset to be used for the session. At suboperation 706C, the storage query manager may allocate the compute units designated in the request and/or corresponding NIC ports.

At suboperation 706D, the storage query manager may map the one or more allocated storage nodes to the one or more compute units through NIC ports and/or network paths between the storage nodes and compute units. The storage query manager may then verify that the NIC ports and network paths may provide adequate bandwidth to support the requested bandwidth for the compute units and the allocated storage nodes. In embodiments in which the dataset is erasure coded across more than one storage node, the verification may apply to all nodes from which the erasure coded data may be sent. At suboperation 706E, the storage query manager may calculate a QoS probability for the storage query plan for the session based, for example, on one or more performance benchmarks and/or historical data. At suboperation 706F, the storage query manager may return a storage query plan that may map one or more of the compute units identified in the request to one or more storage nodes using allocated storage and/or network bandwidth that may satisfy the one or more bandwidths requested in the request.

Table 3 illustrates a data structure with examples of objects that the embodiment illustrated in Fig. 7 may use to track the available bandwidth of one or more storage nodes, compute nodes, network paths, and/or the like, as well as performance benchmark reference data and/or historical performance data.

Table 3

| |
|---|
| Storage.Node[].Port[].AvailBW[] |
| GPUServer.Node[].Port[].AvailBW[] |
| Network.Path[].AvailBW[] |
| Benchmarked Data Reference |
| Historical Performance Data |

At operation 708, if the storage query manager was not able to allocate resources to satisfy the request (e.g., a storage query plan failure), the storage query manager may generate an availability resource map summarizing the resources that may be available. At operation 710, if the storage query manager was able to allocate resources to satisfy the request (e.g., a storage query plan success), it may return an allocated resource map that may specify the resources that may be used by the user and/or application during the processing session. Alternatively, if the storage query manager was not able to allocate resources to satisfy the request (e.g., a storage query plan failure), it may return the availability resource map to inform the user and/or application of the resources that may be available. The user and/or application may use the availability resource map, for example, to issue a revised request that the storage query manager may be able to satisfy. At operation 712, the storage query manager may await a new request and then return to operation 704.

Fig. 8 illustrates an example embodiment of an availability resource map in accordance with example embodiments of the disclosure. The left side 800 may indicate the maximum bandwidth and allocated bandwidth for combinations of client nodes and ports. The right side 801 may indicate the maximum bandwidth and allocated bandwidth for combinations of storage nodes and ports. The maximum bandwidth may be determined, for example, by consulting device specifications, by obtaining baseline data based on benchmarking operations, by applying historical performance data for the devices, and/or the like. The difference between the maximum and allocated bandwidth may represent the available bandwidth for each node/port combination. For example, the combination of client node CN1 and port P1 may have a maximum bandwidth of 100Gb/s, of which 10Gb/s may be allocated. Thus CN1 and P1 may have 90Gb/s of available bandwidth.

Fig. 9 illustrates an example embodiment of a resource allocation map in accordance with example embodiments of the disclosure. For each row of the map, the three left columns may indicate a compute node, a network port, and a storage node that has been mapped to the compute node. The rightmost column may indicate the amount of bandwidth that has been allocated to the combination of compute node and storage node. For example, a bandwidth of 2Gb/s may have been allocated to the combination of client node CN1, port P1, and storage node SN5.

The embodiment of the resource allocation map 900 illustrated in Fig. 9 may be used, for example, to return to a user and/or application in response to a request for resources. As another example, it may be used for comparison to telemetry data 903, which may include one or more QoS metrics, that a storage query manager may use to monitor and manage overall processing session resources including compute (client) nodes, network resources, and/or storage nodes during execution to ensure that pre-allocated resources and performance are being provided. If the actual performance is not meeting the QoS estimated during formulation of the storage query plan, the storage query manager may adjust the operation of the system, for example, by reallocating one or more resources including one or more storage nodes, network paths, and/or the like.

Performance Estimation

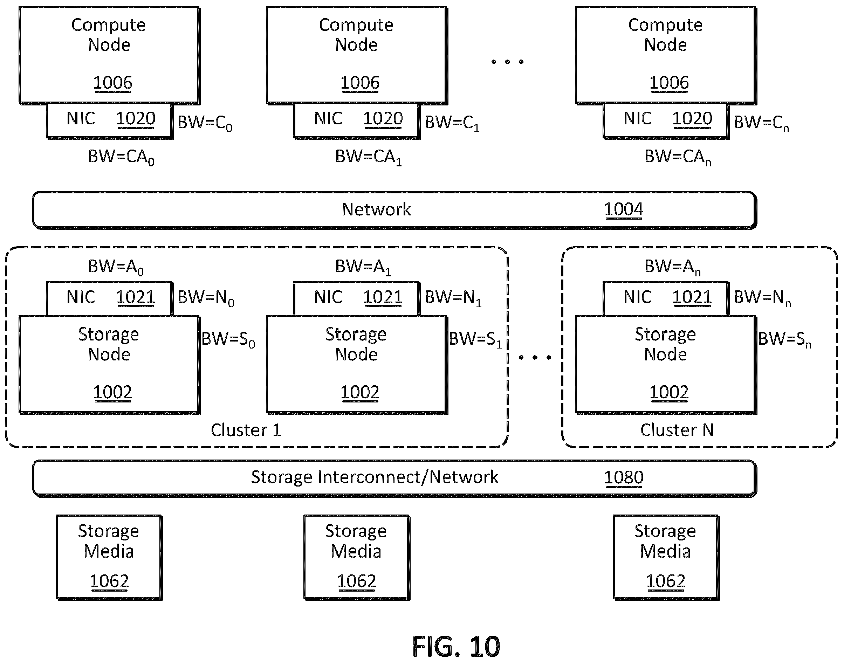

Fig. 10 illustrates an embodiment of a system including storage, networking, and compute resources in accordance with example embodiments of the disclosure. The embodiment illustrated in Fig. 10 may be used to illustrate background information relating to how bandwidths may be determined in accordance with example embodiments of the disclosure. For purposes of illustration, some specific implementation details are illustrated in Fig. 10, but the principles of the disclosure are not limited to these details.

The system illustrated in Fig 10 may include one or more compute nodes 1006, one or more storage nodes 1002, and a pool of storage media 1062. The storage nodes 1002 may be grouped into one or more clusters, racks, and/or the like. In the example illustrated in Fig. 10, the storage nodes 1002 may be divided into Cluster 1 through Cluster N.

A network 1004 may be implemented with any type and/or configuration of network resources in which one or more network paths may be allocated between allocated storage nodes and allocated compute nodes. The pool of storage media 1062 may be implemented with any storage media such as flash memory that may be interfaced to one or more of the storage nodes 1002 through a storage interconnect and/or network 1080 such as NVMe-oF.

The maximum bandwidth (BW) of each compute (client) node may be indicated by BW=Ci, and the allocated bandwidth of each compute node may be indicated by BW=CAi, where i = 0...n, and n may represent the number of compute nodes.

The maximum bandwidth of each storage node may be indicated by BW=Si, the maximum bandwidth for each corresponding NIC may be indicated by BW=Ni, and the allocated bandwidth for the combination of the storage node and corresponding NIC may be indicated by BW=Ai, where i = 0...n, and n may represent the number of storage nodes.

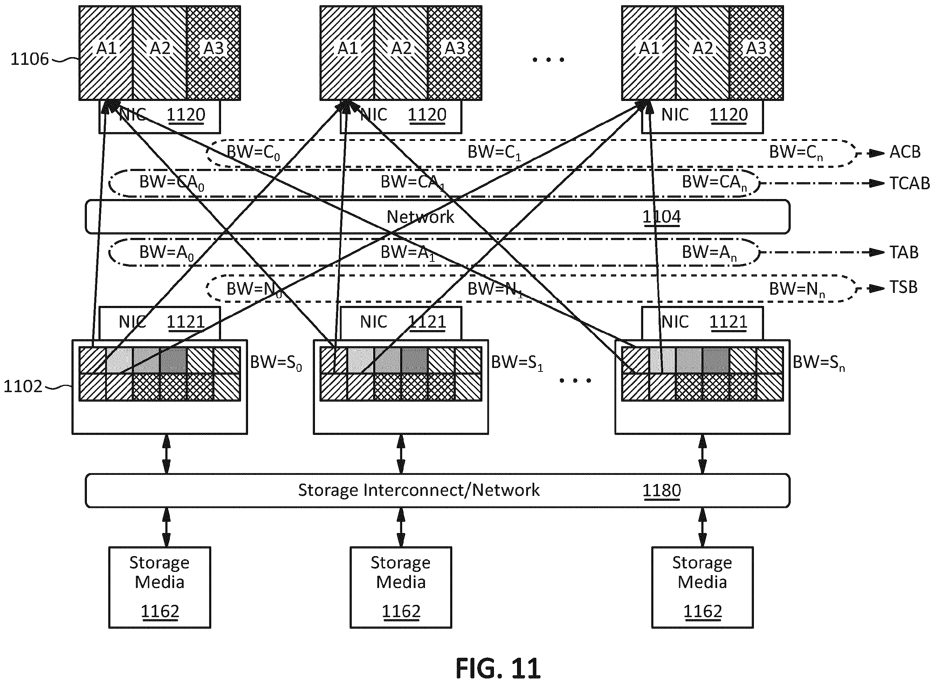

In some embodiments, one or more assumptions may be made about the components illustrated in Fig 10 to simplify and/or facilitate performance estimations such as those illustrated in Fig. 11. For example, each of the compute nodes 1006 may have one or more corresponding NICs 1020, and in this example, one port may be assigned per compute unit in the compute node 1006. Each of the storage nodes 1002 may have one or more corresponding NICs 1021, each of which may have one or more ports. The pool of storage media 1062 and interconnect/network architecture may provide consistent bandwidth support that may be capable of operating at any network speed that may be allocated to the storage nodes 1002. The network 1004 may provide full point-to-point bandwidth support for any bandwidth that may be allocated between storage nodes 1002 and compute nodes 1006. Multiple concurrent processing sessions may execute on the same servers and/or sets of servers. However, these assumptions are not necessary, and performance estimations may be implemented without these or any assumptions.

Fig. 11 illustrates embodiments of methods for estimating performance in accordance with example embodiments of the disclosure. The embodiments illustrated in Fig. 11 may be based, for example, on the system illustrated in Fig. 10.

Referring to Fig. 11, Applications A1, A2, and A3, which may run on each of the compute nodes 1106, may access corresponding portions of datasets in storage nodes 1102 shown with like shading.

An aggregated client bandwidth (ACB) may be determined by summing Ci for all client nodes as follows:

$$ACB = \sum_{i=0}^{n} Ci \qquad\qquad \text{Eq. 1}$$

where Ci may indicate a maximum client node bandwidth (MCB), and n may be the number of clients.

A total client allocated bandwidth (TCAB) may be determined by summing CAi for all client nodes as follows:

$$TCAB = \sum_{i=0}^{n} CAi \qquad\qquad \text{Eq. 2}$$

where CAi may indicate the allocated bandwidth per client, and n may be the number of clients.

To determine a total storage bandwidth (TSB), the lower of the storage bandwidth (S) for the node and the network bandwidth (N) for the node may be used because, for example, the full maximum bandwidth of the storage node may not be usable if the NIC for the storage node has a lower maximum bandwidth. Therefore, the total storage bandwidth (TSB) may be determined as follows:

$$TSB = \sum_{i=0}^{n} (N > S ? N : S)i \qquad\qquad \text{Eq. 3}$$

where N may indicate the maximum NIC bandwidth, S may indicate the maximum bandwidth of the corresponding storage node, and n may be the number of storage nodes.

The total allocated bandwidth (TAB) may be determined by summing Ai for all storage nodes as follows:

$$TAB = \sum_{i=0}^{n} Ai \qquad\qquad \text{Eq. 4}$$

where Ai may indicate the allocated bandwidth per node, and n may be the number of storage nodes.

The total available storage bandwidth (TASB) may then be determined by TASB = TSB - TAB. The total available client bandwidth (TACB) may then be determined by

$$TACB = ACB - TCAB.$$

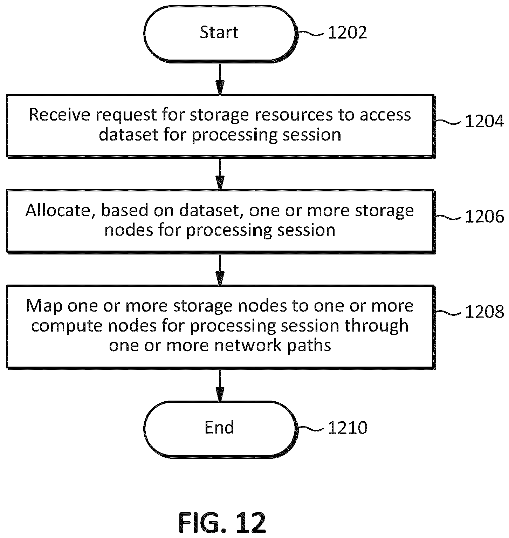

Fig. 12 illustrates a method in accordance with example embodiments of the disclosure. The method may begin at operation 1202. At operation 1204, the method may receive a request for storage resources to access a dataset for a processing session. At operation 1206, the method may allocate, based on the dataset, one or more storage nodes for the processing session. At operation 1208, the method may map one or more of the storage nodes to one or more compute nodes for the processing session through one or more network paths. The method may end at operation 1210.

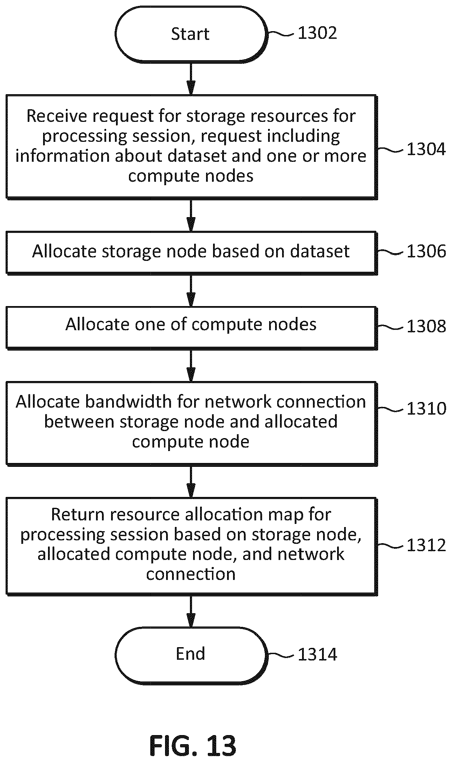

Fig. 13 illustrates another method in accordance with example embodiments of the disclosure. The method may begin at operation 1302. At operation 1304, the method may receive a request for storage resources for a processing session, wherein the request includes information about a dataset and one or more compute nodes. At operation 1306, the method may allocate a storage node based on the dataset. At operation 1308, the method may allocate one of the compute nodes. At operation 1310, the method may allocate a bandwidth for a network connection between the storage node and the allocated compute node. At operation 1312, the method may return a resource allocation map for the processing session based on the storage node, the allocated compute node, and the network connection. The method may end at operation 1314.

The embodiments illustrated in Figs. 12 and 13, as well as all of the other embodiments described herein, are example operations and/or components. In some embodiments, some operations and/or components may be omitted and/or other operations and/or components may be included. Moreover, in some embodiments, the temporal and/or spatial order of the operations and/or components may be varied. Although some components and/or operations may be illustrated as individual components, in some embodiments, some components and/or operations shown separately may be integrated into single component and/or operation, and/or some components and/or operations shown as single component and/or operation may be implemented with multiple components and/or operations.

The embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to an integrated circuit may refer to all or only a portion of the integrated circuit, and a reference to a block may refer to the entire block or one or more subblocks. The use of terms such as "first" and "second" in this disclosure and the claims may only be for purposes of distinguishing the things they modify and may not indicate any spatial or temporal order unless apparent otherwise from context. In some embodiments, a reference to a thing may refer to at least a portion of the thing, for example, "based on" may refer to "based at least in part on," "access" may refer to "access at least in part," and/or the like. A reference to a first element may not imply the existence of a second element. Various organizational aids such as section headings and the like may be provided as a convenience, but the subject matter arranged according to these aids and the principles of this disclosure are not limited by these organizational aids.

The various details and embodiments described above may be combined to produce additional embodiments according to the inventive principles of this patent disclosure. Since the inventive principles of this patent disclosure may be modified in arrangement and detail without departing from the inventive concepts, such changes and modifications are considered to fall within the scope of the following claims.


**Claims**

1. A method comprising:

   receiving a request for storage resources to access a dataset for a processing session;
   allocating, based on the dataset, one or more storage nodes for the processing session; and
   mapping the one or more of the storage nodes to one or more compute nodes for the processing session through one or more network paths.

2. The method of claim 1, further comprising returning a resource map of the one or more storage nodes and the one or more compute nodes.

3. The method of claim 2, wherein the resource map comprises an allocated resource map.

4. The method of claim 2, wherein the resource map comprises an availability resource map.

5. The method of claim 1, further comprising estimating an available storage bandwidth for the processing session.

6. The method of claim 5, further comprising estimating an available client bandwidth.

7. The method of claim 1, further comprising allocating a bandwidth to a connection between at least one of the one or more storage nodes and at least one of the one or more compute nodes through one of the network paths.

8. The method of claim 5, wherein the available storage bandwidth for the processing session is estimated based on benchmark data for the one or more storage nodes.

9. The method of claim 5, wherein the available storage bandwidth for the processing session is estimated based on historical data for the one or more storage nodes.

10. The method of claim 1, further comprising determining a performance of accessing the dataset for the processing session.

11. The method of claim 10, wherein determining a performance of accessing the dataset for the processing session comprises determining a quality-of-service (QoS) for the processing session.

12. The method of claim 11, wherein determining a QoS for the processing session comprises calculating a QoS probability based on one of baseline data or historical data for the one or more storage nodes.

13. The method of claim 1, further comprising monitoring an actual performance of the one or more storage nodes for the processing session.

14. The method of claim 1, wherein the processing session comprises an artificial intelligence training session.

**Amended claims in accordance with Rule 137(2) EPC.**

1. A method of a system comprising one or more storage nodes (102, 202) storing a dataset for a processing session, one or more network paths (218) coupling the one or more storage nodes (102, 202) to one or more compute nodes (106, 206) for the processing session, and a storage query manager (108, 208) performing, the method comprising:

   receiving (1204, 1304), by the storage query manager (108, 208), a request (110) for storage resources to access the dataset for the processing session;
   allocating (1206, 1306), by the storage query manager (108, 208), the one or more storage nodes (102, 202) for the processing session based on the dataset; and
   mapping (1208, 1308), by the storage query manager (108, 208), the allocated one or more storage nodes (102, 202) to the one or more compute nodes (106, 206) for the processing session through the one or more network paths (218).

2. The method of claim 1, further comprising returning a resource map of the one or more storage nodes (102, 202) and the one or more compute nodes (106, 206).

3. The method of claim 2, wherein the resource map comprises an allocated resource map.

4. The method of claim 2, wherein the resource map comprises an availability resource map.

5. The method of claim 1, further comprising estimating an available storage bandwidth for the processing session.

6. The method of claim 5, further comprising estimating an available client bandwidth.

7. The method of claim 1, further comprising allocating a bandwidth to a connection between at least one of the one or more storage nodes (102, 202) and at least one of the one or more compute nodes (106, 206) through one of the network paths (218).

8. The method of claim 5, wherein the available storage bandwidth for the processing session is estimated based on benchmark data for the one or more storage nodes (102, 202).

9. The method of claim 5, wherein the available storage bandwidth for the processing session is estimated based on historical data for the one or more storage nodes (102,202).

10. The method of claim 1, further comprising determining a performance of accessing the dataset for the processing session.

11. The method of claim 10, wherein determining a performance of accessing the dataset for the processing session comprises determining a quality-of-service (QoS) for the processing session.

12. The method of claim 11, wherein determining a QoS for the processing session comprises calculating a QoS probability based on one of baseline data or historical data for the one or more storage nodes (102, 202).

13. The method of claim 1, further comprising monitoring an actual performance of the one or more storage nodes (102, 202) for the processing session.

14. The method of claim 1, wherein the processing session comprises an artificial intelligence training session.

15. A system comprising:

one or more storage nodes (102, 202) configured to store a dataset for a processing session;
one or more network paths (218) configured to couple the one or more storage nodes (102, 202) to one or more compute nodes (106, 206) for the processing session; and
a storage query manager (108, 208) configured to:

receive (1204, 1304) a request (110) for storage resources to access the dataset for the processing session,
allocate (1206, 1306) the one or more of the storage nodes (102, 202) for the processing session based on the dataset, and
map (1208, 1308) the allocated one or more storage nodes (102, 202) to the one or more compute nodes (106, 206) for the processing session through the one or more network paths (218).

FIG. 1

FIG. 2

EP 4 033 422 A1

**FIG. 3**

FIG. 4

FIG. 5

Start ~602

Retrieve performance bandwidth capabilities ~604

Retrieve one or more network topologies and/or bandwidth capabilities ~606

Retrieve one or more compute server bandwidth capabilities ~608

Load benchmark data for use as performance baseline ~610

Retrieve information about compute resources ~612

Analyze and/or calculate bandwidth available for compute units ~614

Storage query manager ready to process storage query requests ~616

FIG. 6

EP 4 033 422 A1

702 — ( Start )

704 — Receive request for resources from user and/or application

706 — Analyze request and create storage query plan

708 — Generate availability resource map

710 — Return allocated resource map or availability resource map

712 — Await new request

706A — Locate and map dataset objects in one or more storage nodes

706B — Allocate one or more storage nodes based on location of data

706C — Allocate compute units designated in request and/or corresponding NIC ports

706D — Map one or more allocated storage nodes to one or more compute units

706E — Calculate QoS probability for storage query plan for session

706F — Return storage query plan

**FIG. 7**

Resource Availability Map

| Client Node | Port | BW | Alloc |
|---|---|---|---|
| CN1 | P1 | 100Gb | 10Gb |
| CN1 | P2 | 100Gb | 2Gb |
| CN2 | P1 | 200Gb | 30Gb |
| CN2 | P2 | 200Gb | 50Gb |
| ... | | | |

| Storage Node | Port | BW | Alloc |
|---|---|---|---|
| SN1 | P1 | 100Gb | 10Gb |
| SN1 | P2 | 100Gb | 5Gb |
| SN2 | P1 | 200Gb | 20Gb |
| SN2 | P2 | 200Gb | 15Gb |
| ... | | | |

800

801

## FIG. 8

Resource Allocation Map

| Allocated and Scheduled Sessions | | | |
|---|---|---|---|
| CN1 | P1 | SN5 | 2Gb |
| CN1 | P2 | SN4 | 2Gb |
| CN2 | P1 | SN3 | 2Gb |
| CN2 | P2 | SN2 | 2Gb |
| ... | | | |

900

Telemetry Data — 903

## FIG. 9

Compute Node 1006 — NIC 1020 — BW=$C_0$ — BW=$CA_0$

Compute Node 1006 — NIC 1020 — BW=$C_1$ — BW=$CA_1$

Compute Node 1006 — NIC 1020 — BW=$C_n$ — BW=$CA_n$

Network 1004

Cluster 1: BW=$A_0$ — NIC 1021 — BW=$N_0$ — Storage Node 1002 — BW=$S_0$; BW=$A_1$ — NIC 1021 — BW=$N_1$ — Storage Node 1002 — BW=$S_1$

Cluster N: BW=$A_n$ — NIC 1021 — BW=$N_n$ — Storage Node 1002 — BW=$S_n$

Storage Interconnect/Network 1080

Storage Media 1062

Storage Media 1062

Storage Media 1062

FIG. 10

EP 4 033 422 A1

FIG. 11

Start ~1202

Receive request for storage resources to access dataset for processing session ~1204

Allocate, based on dataset, one or more storage nodes for processing session ~1206

Map one or more storage nodes to one or more compute nodes for processing session through one or more network paths ~1208

End ~1210

# FIG. 12

```
            ┌─────────────────┐
            │      Start       │──── 1302
            └─────────────────┘
                     │
                     ▼
  ┌───────────────────────────────────┐
  │  Receive request for storage      │
  │  resources for processing         │
  │  session, request including       │──── 1304
  │  information about dataset and     │
  │  one or more compute nodes         │
  └───────────────────────────────────┘
                     │
                     ▼
  ┌───────────────────────────────────┐
  │  Allocate storage node based on    │──── 1306
  │  dataset                           │
  └───────────────────────────────────┘
                     │
                     ▼
  ┌───────────────────────────────────┐
  │  Allocate one of compute nodes     │──── 1308
  └───────────────────────────────────┘
                     │
                     ▼
  ┌───────────────────────────────────┐
  │  Allocate bandwidth for network    │
  │  connection between storage node   │──── 1310
  │  and allocated compute node        │
  └───────────────────────────────────┘
                     │
                     ▼
  ┌───────────────────────────────────┐
  │  Return resource allocation map    │
  │  for processing session based on   │
  │  storage node, allocated compute   │──── 1312
  │  node, and network connection      │
  └───────────────────────────────────┘
                     │
                     ▼
            ┌─────────────────┐
            │      End         │──── 1314
            └─────────────────┘
```

## FIG. 13

## EUROPEAN SEARCH REPORT

Application Number

EP 21 20 2071

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/026263 A1 (GELL DAVID [US] ET AL) 26 January 2017 (2017-01-26) * abstract * | 1-14 | INV. G06Q10/04 |

TECHNICAL FIELDS SEARCHED (IPC)

G06Q

The present search report has been drawn up for all claims

| Place of search | Date of completion of the search | Examiner |
|---|---|---|
| Munich | 2 March 2022 | Krawaritis, Achilles |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 2071

This annex lists the patent family members relating to the patent documents cited in  the above-mentioned European search report.
The members are as contained in the European Patent Office EDP file on
The European Patent Office is in no way liable for these particulars which are merely given for the purpose of information.

02-03-2022

| Patent document cited in search report | | Publication date | Patent family member(s) | | Publication date |
|---|---|---|---|---|---|
| US 2017026263 | A1 | 26-01-2017 | US 2017026263 | A1 | 26-01-2017 |
|  |  |  | US 2019260658 | A1 | 22-08-2019 |

EPO FORM P0459

For more details about this annex : see Official Journal of the European Patent Office, No. 12/82